# EUROPEAN PATENT APPLICATION

(11) **EP 4 715 177 A1**
(43) Date of publication of application: **25.03.2026**
(21) Application number: 25202636.4
(22) Date of filing: 17.09.2025
(51) Int. Cl.: F02B 37/04

(54) **ENGINE ASSEMBLY FOR A MOTOR VEHICLE AND CONTROL METHOD THEREOF**

(30) Priority: 18.09.2024 IT 202400020830
(71) Applicant: FERRARI S.p.A., 41100 Modena (IT)
(72) Inventor: RABBOLINI, Silvio, 41100 Modena (IT)
(74) Representative: Studio Torta S.p.A.

(57) **Abstract**

An engine assembly (10) for a motor vehicle (1) comprising an internal combustion engine (11), an intake system (12), an exhaust system (13) and a forced induction system (30) provided with a turbine (31) and with a compressor (32). The intake system (12) comprises two ducts (23b, 24b), which fluidly connect the compressor (32) to the internal combustion engine (11), and two bypass ducts (56, 58), which fluidly connect the compressor (32) to the internal combustion engine (11). The engine assembly (10) comprises two further compressors (50, 51), each located at a respective duct (23b, 24b), and an electronic control unit (60). The electronic control unit (60) is configured to receive and/or determine a quantity (ω1, ω2) associated with a rotation speed of at least one of the internal combustion engine (11) and the forced induction system (30); control that the gas flow flows through the ducts (23b, 24b) and is compressed by the further compressors (50, 51), respectively, when the quantity (ω1, ω2) complies with a control criterion; and control that the gas flow flows through the bypass ducts (56, 58), when the quantity (ω1, ω2) does not comply with the control criterion.

## Description

### CROSS-REFERENCE TO RELATED APPLICATIONS

This patent application claims priority from Italian patent application no. 102024000020830 filed on September 18, 2024, the entire disclosure of which is incorporated herein by reference.

### TECHNICAL FIELD

The invention relates to an engine assembly, in particular for a motor vehicle. The invention also relates to a method for controlling an engine assembly.

### BACKGROUND

Motor vehicles are known, which basically comprise:
- a frame;
- a plurality of wheels, which are rotatable relative to the frame about respective rotation axes;
- an internal combustion engine operatively connected to at least some of the wheels;
- an intake system, which is fluidly connected to the internal combustion engine and is configured to guide a gas flow comprising air towards the internal combustion engine; and
- an exhaust system, which is fluidly connected to the internal combustion engine and is configured to evacuate the exhaust gas generated by the internal combustion engine.

Known motor vehicles further comprise a forced induction system provided with a turbine and a compressor operatively connected to one another.

In a known manner, at least part of the exhaust gases generated by the internal combustion engine are used to cause the turbine to rotate; the turbine, in turn, causes the rotation of the compressor, which compresses the gas flow directed to the internal combustion engine.

The known forced induction systems are subject to some drawbacks, which reduce their efficiency and the ability to always operate effectively under different load conditions.

Among the aforementioned drawbacks, it is worth mentioning the so-called "turbo-lag".

In particular, in order to achieve high specific powers, known forced induction systems employ large-sized compressors and turbines, which, however, have correspondingly large inertias. Consequently, during use, when the user of the motor vehicle demands an increase in power, a transient operation is established, during which the user's request is not fulfilled.

In particular, following the user's request, the ability of the compressor to compress the gas flow directed to the internal combustion engine becomes effective only once the turbine is reached by a flow of exhaust gases having a flow rate and an enthalpy content sufficient to adequately accelerate it.

DE102019112314A1 discloses a method for operating a drive device of a motor vehicle. The drive device comprises an internal combustion engine with at least two cylinders for driving the motor vehicle and an intake tract, which can be flowed through by air to be supplied to the cylinders. During operation of the internal combustion engine, filling differences between the cylinders are deliberately caused.

DE102022112938 discloses a turbocharger unit for a motor vehicle, provided with a compressor for compressing charge air, a turbine which can be coupled to the compressor via a turbo shaft for recuperating flow energy by expanding the charge air, and at least one intercooler for cooling the charge air coming from the compressor. The intercooler connects an outlet of the compressor to an inlet of the turbine in order to supply the cooled charge air coming from the compressor essentially directly to the turbine. The intercooler, compressor, and turbine are combined in a compact and energy-efficient manner in the turbocharger unit in the charge air path, enabling good energy efficiency of a supercharged powertrain of a motor vehicle in the partial load range.

DE102008044382 discloses an internal combustion engine with two cylinder banks forming a V-shaped cylinder block. A turbocharger system comprises a high-pressure turbocharger arranged in the valley between the cylinder banks, a first low-pressure turbocharger arranged adjacent to an outer side of one of the cylinder banks, and a second low-pressure turbocharger arranged adjacent to an outer side of the second cylinder bank.

Owing to the above, the efficiency of forced induction systems needs to be increased.

An object of the invention is to fulfil the need discussed above, preferably in a simple and cost-effective fashion.

### DESCRIPTION OF THE INVENTION

Said object is reached by an engine assembly as defined in claim 1. The object is also reached by a method for controlling an engine assembly as defined in claim 9.

The dependent claims define special embodiments of the invention.

### BRIEF DESCRIPTION OF THE DRAWINGS

Hereinafter, an embodiment of the invention is described, in order to allow the latter to be better understood, by way of non-limiting example and with reference to the accompanying drawings, wherein:
- figure 1 is a schematic view of a motor vehicle according to the invention; and
- figure 2 is a view of the engine assembly of the motor vehicle of figure 1 with parts removed for greater clarity.

### EMBODIMENTS OF THE INVENTION

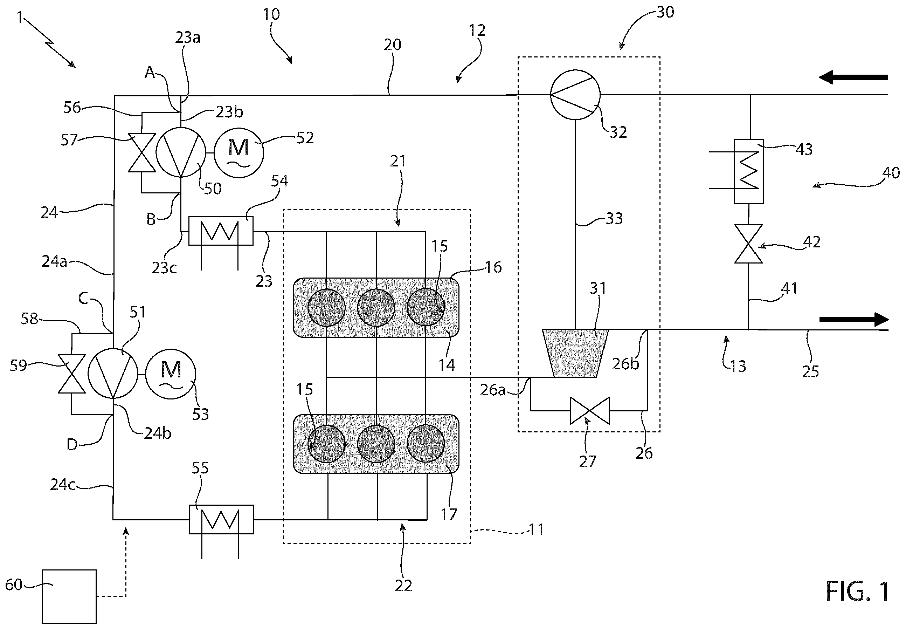

In figure 1, reference number 1 is used to indicate, as a whole, a motor vehicle comprising an engine assembly 10 according to the invention.

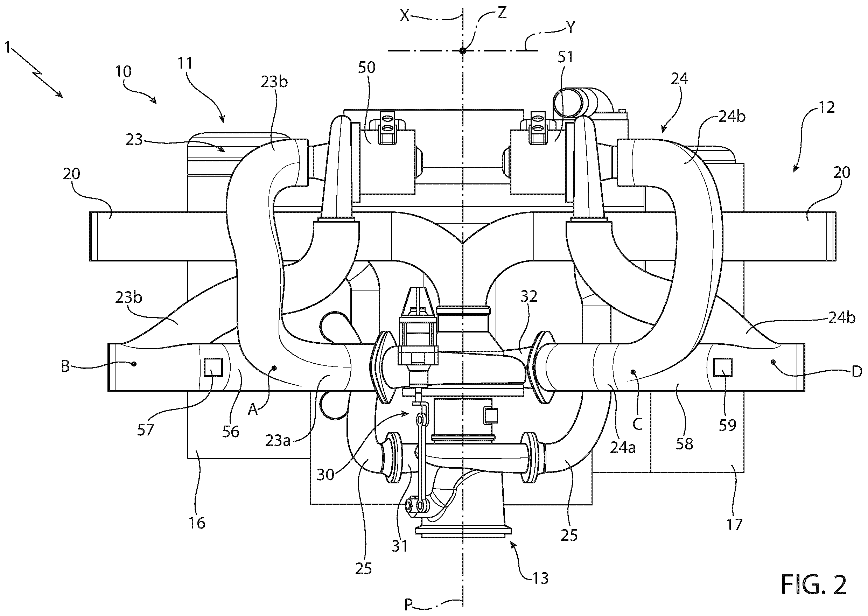

In a known manner, the motor vehicle 1 can be associated with an integral reference system comprising (figure 2):
- a longitudinal extension direction X;
- a direction Z that is vertical to the ground on which the motor vehicle 1 rests and is oriented perpendicularly to the direction X; and
- a direction Y orthogonal to the directions X and Z.

The engine assembly 10 comprises, in turn (Figure 1):
- an internal combustion engine 11, which is configured to generate mechanical power and exhaust gases as a result of a combustion process;
- an intake system 12, which is fluidly connected to the internal combustion engine 11 and is configured to guide a gas flow comprising air towards the internal combustion engine 11; and
- an exhaust system 13, which is fluidly connected to the internal combustion engine 11 and is configured to evacuate the exhaust gas generated by the internal combustion engine 11.

In detail, the internal combustion engine 11 is a four-stroke engine and comprises a crankshaft - not shown - and an engine block 14, at which a plurality of cylinders 15 are obtained. More in detail, the internal combustion engine 11 comprises two banks 16, 17, each comprising three respective cylinders 15.

In the non-limiting embodiment shown herein, the internal combustion engine 11 has a "V"-shaped arrangement and a 120° angle between the two banks 16, 17.

In a known manner, moreover, each cylinder 15 comprises a respective combustion chamber and a respective piston operatively connected to the crankshaft.

It is possible to define a quantity ω1 associated with the speed of rotation of the crankshaft about its own rotation axis. For example, the quantity ω1 is the angular speed of the crankshaft or the number of revolutions of the crankshaft per unit of time.

As schematically shown in figure 1, the intake system 12 comprises:
- a duct 20, which is at least indirectly fluidly connected to the outside of the motor vehicle 1;
- an intake manifold 21 fluidly connected to the cylinders 15 of the bank 16;
- an intake manifold 22 fluidly connected to the cylinders 15 of the bank 17;
- a duct 23, which fluidly connects the duct 20 to the intake manifold 21; and
- a duct 24, which fluidly connects the duct 20 to the intake manifold 22.

As schematically shown in figure 1, again, the exhaust system 13 comprises a duct 25, which is configured to receive the exhaust gases from the cylinders 15 by means of respective ducts.

The engine assembly 10 further comprises a forced induction system 30 comprising:
- a turbine 31, which is configured to rotate due to the thrust of exhaust gas flowing through the exhaust system 13; and
- a compressor 32, which is configured to increase the pressure of the gas flow directed to the internal combustion engine 11 along the intake system 12.

Preferably, the forced induction system 30 also comprises a shaft 33, which operatively connects the turbine 31 to the compressor 32. In detail, the impeller of the turbine 31 and the impeller of the compressor 32 are both fitted onto the shaft 33.

It is also possible to define a quantity ω2 associated with the speed of rotation of one of the turbine 31, the compressor 32 and the shaft 33. For example, the quantity ω2 is expressed as an angular speed or as a number of revolutions per unit of time.

Preferably, the exhaust system 13 comprises a bypass duct 26 and a wastegate valve 27 located at the bypass duct 26. In detail, the bypass duct 26 comprises two ends 26a, 26b, which are opposed to one another and both fluidly connected to the duct 25. The end 26a is located upstream of the turbine 31 and the end 26b is located downstream of the turbine 31 considering the direction of the exhaust gases exiting the internal combustion engine 11 along the exhaust system 13.

The wastegate valve 27 is configured to selectively allow or deny the passage of the exhaust gases along the bypass duct 26, so as to control the maximum operating pressure of the turbine 31 rotated by the exhaust gases.

In the non-limiting embodiment shown herein, the engine assembly 10 also comprises an exhaust gas recirculation system 40. Said recirculation system 40 comprises, in turn:
- a duct 41, which fluidly connects the exhaust system 13 to the intake system 12; and
- an EGR valve 42, which is configured to selectively allow and deny the passage of exhaust gases from the exhaust system 13 to the intake system 12 along the duct 41.

In detail, the duct 41 fluidly connects the duct 25 downstream of the turbine 31, considering the direction of the flow of the exhaust gases, and the duct 20 upstream of the compressor 32, considering the direction of the gas flow.

Preferably, the recirculation system 40 also comprises an intercooler 42 configured to cool the exhaust gases flowing along the duct 41. In detail, the intercooler 42 is fluidly interposed between the EGR valve 41 and the intake system 12.

Advantageously, the engine assembly 10 comprises two further compressors 50, 51, each fluidly interposed between the compressor 32 and a respective bank 16, 17.

In detail, the compressor 50 is located at the duct 23 and the compressor 51 is located at the duct 24. In other words, the compressors 50 and 51 are arranged in parallel to one another and are in series to the compressor 32.

In addition, the engine assembly 10 comprises two electric motors 52, 53, each adapted to operate a respective compressor 50, 51. Therefore, the compressors 50, 51 are electric compressors.

Specifically, the compressors 50, 51 are centrifugal compressors and the electric motors 52, 53 preferably are of the brushless type.

In addition, it should be pointed out that the compressors 50 and 51 are mechanically separate from and independent of the turbine 31.

The engine assembly 10 further comprises:
- an intercooler 54 configured to cool the gas flow delivered by the compressor 50 and directed to the cylinders 15 of the bank 16;
- an intercooler 55 configured to cool the gas flow delivered by the compressor 51 and directed to the cylinders 15 of the bank 17.

In detail, the intercooler 54 is fluidly interposed between the compressor 50 and the bank 16 along the duct 23; the intercooler 55 is fluidly interposed between the compressor 51 and the bank 17 along the duct 24.

In further detail, the duct 23 comprises:
- a segment 23a, which extends starting from the duct 20;
- a segment 23b, which extends starting from the segment 23a between a section A and a section B; and
- a segment 23c, which extends between the section B and the intake manifold 21.

The compressor 50 is located at the segment 23b; the intercooler 54 is located at the segment 23c.

Similarly, the duct 24 comprises:
- a segment 24a, which extends starting from the duct 20;
- a segment 24b, which extends starting from the segment 23a between a section C and a section D; and
- a segment 23c, which extends between the section D and the intake manifold 22.

The compressor 51 is located at the segment 24b; the intercooler 55 is located at the segment 24c.

Preferably, the intake system 12 comprises a bypass duct 56 and a bypass valve 57 located at the bypass duct 56. In detail, the bypass duct 56 also extends between the section A and the section B. Consequently, the bypass valve 57 is arranged in parallel to the compressor 50.

The bypass valve 57 is configured to selectively allow or deny the passage of the gas flow along the bypass duct 56.

Preferably, the intake system 12 also comprises a bypass duct 58 and a bypass valve 59 located at the bypass duct 58. In detail, the bypass duct 58 also extends between the section C and the section D. Consequently, the bypass valve 59 is arranged in parallel to the compressor 51.

The bypass valve 59 is configured to selectively allow or deny the passage of the gas flow along the bypass duct 58.

The engine assembly 10 further comprises an electronic control unit 60 - only schematically shown in Figure 1 - operatively connected to the motors 52, 53 and to the bypass valves 57 and 59.

The electronic control unit 60 is configured to:
- receive and/or determine the value of at least one of the quantity ω1 and the quantity w2;
- control that the gas flow flows through the sections 23b and 24b and is compressed by the compressors 50 and 51, when the quantities ω1 and/or ω2 comply with a control criterion; and
- control that said gas flow flows through the bypass ducts 56 and 58, when the quantities ω1 and/or ω2 do not comply with the control criterion.

In particular, the quantities ω1 and ω2 are detected by means of sensors of the motor vehicle 1 and/or calculated by means of a mathematical model.

In detail, the bypass valves 57 and 59 are operatively connected to the electronic control unit 60 and are solenoid valves selectively movable between respective first positions, in which they deny the passage of the gas flow along the respective bypass ducts 56 and 58, and respective second positions, in which they allow the passage of the gas flow along the respective bypass ducts 56 and 58.

The electronic control unit 60 is configured to:
- place the bypass valves 57 and 59 in the respective first positions, when the quantities ω1 and/or ω2 comply with the control criterion; and
- place the bypass valves 57 and 59 in the respective second positions, when the quantities ω1 and/or ω2 do not comply with the control criterion.

In detail, the quantities ω1 and/or ω2 comply with the control criterion when they are smaller than a threshold value ωθ1, ωθ2.

Preferably, the electronic control unit 60 is configured to keep the compressors 50 and 51 rotating both when the bypass valves 57 and 59 are in the respective first positions and when the bypass valves 57 and 59 are in the respective second positions.

The electronic control unit 60 is also operatively connected to the wastegate valve 27.

Preferably, the electronic control unit 60 is configured to:
- command the wastegate valve 27 to deny the passage of the exhaust gases along the bypass duct 26, when the quantities ω1 and/or ω2 comply with the control criterion; and
- command the wastegate valve 27 to allow the passage of the exhaust gases along the bypass duct 26, when the quantities ω1 and/or ω2 do not comply with the control criterion.

As shown in the embodiment represented in figure 2, the engine assembly 10 is arranged in a symmetrical or substantially symmetrical manner relative to a plane P oriented parallel to the direction X. Furthermore, the plane P preferably is the middle plane of the motor vehicle 1 along the direction Y.

Preferably, but not necessarily, the compressors 50 and 51 are aligned with one another parallel to the direction Y and are equally spaced apart from the plane P.

Preferably, but not necessarily, in addition, the turbine 31 and the compressor 32 are aligned with one another and are both crossed by the plane P. In detail, the impeller of the turbine 31 and the impeller of the compressor 32 are arranged coaxially to one another and in the direction X.

Preferably, but not necessarily, the bypass ducts 56 and 58 are aligned with one another and are parallel to the direction Y.

The operation of the motor vehicle 1 and of the engine assembly 10 will be described below.

In use, the electronic control unit 60 periodically receives and/or determines the value of the quantity ω1 and/or of the quantity ω2.

When the value of the quantity ω1 and/or of the quantity ω2 is smaller than the threshold value ωθ1, ωθ2 (for example, in the case of low rotation speeds of the internal combustion engine 11), the quantities ω1 and/or ω2 comply with the control criterion and the electronic control unit 60 commands the bypass valves 57 and 59 to deny the passage of the gas flow along the bypass ducts 56 and 58, respectively.

In this condition, the gas flow directed to the internal combustion engine 11, which flows along the duct 20, is compressed by the compressor 32 and is then divided between the duct 23 and the duct 24.

The portion of the gas flow that flows through the duct 23, flows in succession along the segments 23a, 23b and 23c. In detail, when the gas flow flows along the segment 23b, it is further compressed by the compressor 50; when the gas flow flows along the segment 23c, it is cooled in the intercooler 54 and finally reaches the intake manifold 21.

The portion of gas flow that flows through the duct 24 flows in succession along the segments 24a, 24b and 24c. In detail, when the gas flow flows along the segment 24b, it is further compressed by the compressor 51; when the gas flow flows along the segment 24c, it is cooled in the intercooler 55 and finally reaches the intake manifold 22.

In addition, when the value of the quantity ω1 and/or of the quantity ω2 is lower than the threshold value ωθ1, ωθ2, again, the wastegate valve 27 denies the passage of the exhaust gases along the bypass duct 26, which therefore flow through the turbine 31.

Vice versa, when the value of the quantity ω1 and/or of the quantity ω2 is greater than the threshold value ωθ1, ωθ2 (for example, in the case of high rotation speeds of the internal combustion engine 11), the quantities ω1 and/or ω2 do not comply with the control criterion and the electronic control unit 60 commands the bypass valves 57 and 59 to allow the passage of the gas flow along the bypass ducts 56 and 58, respectively.

In this condition, the gas flow directed to the internal combustion engine 11, which flows along the duct 20, is compressed by the compressor 32 and is then divided between the duct 23 and the duct 24.

The portion of gas flow that flows through the duct 23 flows in succession along the segments 23a, 56 and 23c; the portion of gas flow that flows through the duct 24 flows in succession along the segments 24a, 58 and 24c.

In addition, when the value of the quantity ω1 and/or of the quantity ω2 is greater than the threshold value ωθ1, ωθ2, again, the wastegate valve 27 - at least partly - allows the passage of the exhaust gases along the bypass duct 26.

Owing to the above, the advantages of the invention are evident.

In particular, the engine assembly 10 comprises at least two compressors 50, 51, which contribute to increasing the pressure of the air flow directed to the internal combustion engine 11 in the case of low rotation speeds of the internal combustion engine 11 and which, on the other hand, do not intervene in the case of high rotation speeds of the internal combustion engine 11. As a consequence, it is possible to employ a compressor 32 of the forced induction system 30 that is particularly suitable for operating in the field of high rotation speeds. In this way, the *turbo-lag* problems affecting known forced induction systems discussed in the introduction to the description are reduced.

In addition, the claimed arrangement, in which the (electric) compressors 50, 51 are located downstream of the (mechanical) compressor 32 and are arranged in parallel to one another according to the direction of the gas flow along the intake system 12, is particularly advantageous in terms of dynamic efficiency of the system. The use of two compressors in parallel makes it possible to use impellers with small diameters and masses and, therefore, to reduce the power dissipated by the system due to the inertia of the impellers themselves. In this way, the duration of the transient operation and, therefore, the *turbo-lag* time window can be reduced. Furthermore, by having two compressors 50, 51, the overall dimensions and the geometry of the engine assembly 10 can be varied and adjusted with great freedom.

Since the engine assembly 10 has a symmetrical arrangement relative to the plane P, the loads and dynamic stresses associated with the engine assembly 10 can be distributed in an even manner on the vehicle 1.

Finally, the engine assembly 10 and the control method according to the invention can clearly be subject to changes and variants, which, though, do not go beyond the scope of protection set forth in the appended claims.

In particular, the engine assembly 10 could comprise more than two compressors 50, 51.

The internal combustion engine 11 could comprise a number of cylinders 15 other than six and a different arrangement from the "V"-shaped one.

The engine assembly 10 could comprise two forced induction systems 30 fluidly connected to the cylinders 15 of the banks 16 and 17, respectively.

## Claims

1. Engine assembly (10) for a motor vehicle (1) comprising:
- an internal combustion engine (11) comprising a first cylinder bank (16) and a second cylinder bank (17), each comprising a respective plurality of cylinders (15);
- an intake system (12), which is fluidly connected to said internal combustion engine (11) and is configured to guide a gas flow comprising air towards said internal combustion engine (11); and
- an exhaust system (13), which is fluidly connected to said internal combustion engine (11) and is configured to evacuate the exhaust gas generated, in use, by said internal combustion engine (11);
said engine assembly (10) further comprising a forced induction system (30) comprising:
- a turbine (31), which is configured to rotate due to the thrust of exhaust gas passing through, in use, said exhaust system (13); and
- a compressor (32), which is configured to increase the pressure of said gas flow directed, in use, to said internal combustion engine (11) along said intake system (12); said compressor (32) being driven, in use, by said turbine (31);
said intake system (12) comprising:
- a first duct (23b) and a second duct (24b), which fluidly connect said compressor (32) respectively to the cylinders (15) of the first cylinder bank (16) and the second cylinder bank (17);
- a first bypass duct (56) and a second bypass duct (58), which also fluidly connect said compressor (32) respectively to the cylinders (15) of the first cylinder bank (16) and the second cylinder bank (17);
said engine assembly (10) comprising two further compressors (50, 51) arranged respectively at said first duct (23b) and said second duct (24b) and an electronic control unit (60);
**characterized in that** said electronic control unit (60) is configured to:
- receive and/or determine a quantity (ω1, ω2) associated with the rotational speed of at least one of said internal combustion engine (11) and said forced induction system (30);
- control that said gas flow passes through said first and second duct (23b, 24b) and is compressed, in use, by said respective further compressors (50, 51) when said quantity (ω1, ω2) complies with a control criterion; and
- control that said gas flow passes through said first and second bypass duct (56, 58) when said quantity (ω1, ω2) does not comply, in use, with said with control criterion.

2. Engine assembly according to claim 1, wherein said control criterion stipulates that said quantity (ω1, ω2) is smaller than a threshold value (ωθ1, ωθ2).

3. Engine assembly according to claim 1 or 2, comprising at least one electric drive device (52, 53) operatively connected to one or both said further compressors (50, 51).

4. Engine assembly according to any one of the foregoing claims, wherein said intake system (12) comprises:
- first valve means (57) at said first bypass duct (56) configured to selectively deny the passage of said gas flow through said first bypass duct (56);
- second valve means (59) at said second bypass duct (57) configured to selectively deny the passage of said gas flow through said second bypass duct (58);
said first and second valve means (57, 59) being operatively connected to said electronic control unit (60).

5. Engine assembly according to any one of the foregoing claims, comprising at least an intercooler (54, 55) fluidly interposed between at least one of said further compressors (50, 51) and said internal combustion engine (11) along said intake system (12); said intercooler (54, 55) being configured to cool down said gas flow delivered by at least one of said further compressors (50, 51).

6. Engine assembly according to any one of the foregoing claims, wherein said exhaust system (13) comprises:
- a further duct (25), which is fluidly connected to said internal combustion engine (11) and at which said turbine (31) is arranged; and
- a further bypass duct (26) comprising a first end (26a) and a second end (26b) opposite to each other and both fluidly connected to said further duct (25); said first end (26a) being arranged upstream of said turbine (31) and said second end (26b) being arranged downstream of said turbine (31) considering the direction of exhaust gas exiting said internal combustion engine (11) along said exhaust system (13);
said engine assembly (10) comprising a wastegate valve (27) arranged at said bypass duct (26) and configured to selectively allow or deny the passage of exhaust gas along said further bypass duct (26);
said electronic control unit (60) being operatively connected to said wastegate valve (27) and being configured to:
- command said wastegate valve (27) to deny the passage of exhaust gas along said further bypass duct (26) when said quantity (ω1, ω2) complies with said control criterion; and
- command said wastegate valve (27) to allow the passage of exhaust gas along said further bypass duct (26) when said quantity (ω1, ω2) does not comply with said control criterion.

7. Motor vehicle (1) comprising an engine assembly (10) according to any one of the foregoing claims.

8. Motor vehicle according to claim 7, comprising an integral reference system comprising:
- a first direction (X) of longitudinal extension;
- a second direction (Z) that is vertical to the ground on which said motor vehicle (1) rests, in use, and orthogonal to said first direction (X); and
- a third direction (Y) that is orthogonal to said first direction (X) and said second direction (Z);
wherein said engine assembly (10) is arranged symmetrically or substantially symmetrically with respect to a plane (P) that is parallel to said first direction (X).

9. Control method of an engine assembly (10) of a motor vehicle (1); said engine assembly (10) comprising:
- a internal combustion engine (11) comprising a first cylinder bank (16) and a second cylinder bank (17), each comprising a respective plurality of cylinders (15);
- an intake system (12), which is fluidly connected to said internal combustion engine (11) and is configured to guide a gas flow comprising air towards said internal combustion engine (11); and
- an exhaust system (13), which is fluidly connected to said internal combustion engine (11) and is configured to evacuate the exhaust gas generated, in use, by said internal combustion engine (11);
said engine assembly (10) further comprising a forced induction system (30) comprising:
- a turbine (31), which is configured to rotate due to the thrust of exhaust gas passing through, in use, said exhaust system (13); and
- a compressor (32), which is configured to increase the pressure of said gas flow directed, in use, to said internal combustion engine (11) along said intake system (12); said compressor (32) being driven, in use, by said turbine (31);
said intake system (12) comprising:
- a first duct (23b) and a second duct (24b), which fluidly connect said compressor (32) respectively to the cylinders (15) of the first cylinder bank (16) and the second cylinder bank (17);
- a first bypass duct (56) and a second bypass duct (58), which also fluidly connect said compressor (32) respectively to the cylinders (15) of the first cylinder bank (16) and the second cylinder bank (17);
- two further compressors (50, 51) arranged respectively at said first duct (23b) and said second duct (24b) ;
said method being **characterized in that** it comprises the steps of:
i) receiving and/or determining a quantity (ω1, ω2) associated with a rotational speed of at least one of said internal combustion engine (11) and said forced induction system (30);
ii) controlling that said gas flow passes through said first and second duct (23b, 24b) and is compressed respectively by said further compressors (50, 51), when said quantity (ω1, ω2) complies with a control criterion; and
iii) controlling that said gas flow passes through said first and second bypass duct (56, 58), when said quantity (ω1, ω2) does not comply with said control criterion.

10. Method according to claim 9, wherein said control criterion stipulates that said quantity (ω1, ω2) is smaller than a threshold value (ωθ1, ωθ2).

11. Method according to claim 9 or 10, wherein during said step ii), first valve means (57) of said intake system (12) arranged at said first bypass duct (56) deny the passage of said gas flow through said first bypass duct (56) and second valve means (59) of said intake system (12) arranged at said second bypass duct (58) deny the passage of said gas flow through said second bypass duct (58);
wherein during said step iii), said first and second valve means (57, 59) allow the passage of said gas flow respectively through said first bypass duct (56) and said second bypass duct (58).

12. Method according to any one of claims 9 to 11, comprising the step iv) of cooling down said gas flow delivered by at least one of the two further compressors (50, 51) by means of an intercooler (54, 55).

13. Method according to any one of claims 9 to 12, comprising the further steps of:
v) commanding a wastegate valve (27) to deny the passage of exhaust gas along a third bypass duct (26) during step ii); said third bypass duct (26) comprising a first end (26a) and a second end (26b) opposite to each other and both fluidly connected to a fourth duct (25) of said exhaust system (13); said fourth duct (25) being fluidly connected to said internal combustion engine (11) and at which said turbine (31) is arranged; said first end (26a) being arranged upstream of said turbine (31) and said second end (26b) being arranged downstream of said turbine (31) considering the direction of exhaust gas exiting said internal combustion engine (11) along said exhaust system (13); said wastegate valve (27) being arranged at said third bypass duct (26);
vi) commanding said wastegate valve (27) to allow the passage of exhaust gas along said third bypass duct (26) during step iii).
